Europäisches Patentamt

European Patent Office

Office européen des brevets

(19)

(11) Publication number: **0 102 528**
**A2**

(12) **EUROPEAN PATENT APPLICATION**

(21) Application number: **83107613.8**

(22) Date of filing: **02.08.83**

(51) Int. Cl.³: **G 05 D 16/20**
**F 15 B 5/00, G 05 D 3/10**

(30) Priority: **16.08.82 US 408354**

(43) Date of publication of application:
**14.03.84 Bulletin 84/11**

(84) Designated Contracting States:
**DE FR GB NL**

(71) Applicant: **THE PERKIN-ELMER CORPORATION**
**Main Avenue**
**Norwalk Connecticut 06856(US)**

(72) Inventor: **Trost, David**
**134 Old Field Road**
**Fairfield Connecticut(US)**

(72) Inventor: **Galburt, Daniel**
**Silvermine Avenue**
**Norwalk Connecticut(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Voltage to pressure transducer.**

(57) A pressure control system for maintaining pressure of a gas within a container at a preselected value. The volume within the container is connected to a source of pressurized gas. An external portion of the container is spherical shaped and has an orifice formed therein through which gas is exhausted from the volume. A piezoelectric bender bimorph has a portion thereof adjacent the exhaust orifice. Feedback means connected between the volume and the piezoelectric bender bimorph function to vary the position of the bimorph relative to the exhaust orifice to maintain pressure within the container at preselected value.

FIG. I

Croydon Printing Company Ltd

HI-2095

EP 11 0102528

PATENTANV.
GRÜNECKER · DR. KINKELDEY · DR. STOCKMAIR
DR. SCHUMANN · JAKOB · DR. BEZOLD MEISTER
HILGERS · DR MEYER-PLATH
MAXIMILIANSTR. 58 · 8000 MÜNCHEN 22

83 1 07613 . 8

## VOLTAGE TO PRESSURE TRANSDUCER

## BACKGROUND OF THE INVENTION

Precise control of movement or positioning of workpieces is necessary in many fields. For example, in the photolithographic field movement or positioning of a silicon wafer to assure its accurate alignment with patterns on a mask or within the focal plane of a photolithographic mask projection system is critical to the successful fabrication of integrated circuits. In such systems movement or positioning of the work element holding the wafer must be accurate to within microns or less.

Where such control is provided pneumatically, precise control of pressure applied to workpiece is necessary. Typically, in such a system gas which is used to position and maintain a workpiece in position is confined within a container and its pressure controlled electronically. In such a system gas pressure within the container is sensed and converted to voltage. This voltage is then compared with a reference voltage indicative of the desired pressure which is used to control the amount of gas entering or exiting the container to maintain the pressure therein at the desired value.

While the electronic portion of such a control system is inherently capable of controlling pressure to almost any desired accuracy, the mechanical portion of such system introduces inaccuracies which for the purposes discussed above are intolerable.

**0102528**

— 2 —

The present invention relates to a pressure control system whose accuracy is limited only by the degree of sophistication of the electronic control.

## BRIEF SUMMARY OF THE INVENTION

The present invention is a pressure control system. It employs a body or container forming a volume. A source of pressurized gas communicates with the volume through a restriction. Gas is exhausted from the volume through a restricted orifice. The orifice is formed in an area of the container the external portion of which curves down and away therefrom. Extending over this orifice is one end of an elongated piezoelectric bender bimorph. The bimorph which is fixed at its other end is inherently biased to a reference position where it partially restricts the rate of exhaust of gas from the outlet orifice. However, when a voltage is applied to the bimorph it bends toward or away from the orifice by an amount proportional to the direction and magnitude of the applied voltage to increase or decrease the rate of exhaust and thereby affect the pressure of the gas within the container. A pressure to voltage transducer communicates with the volume to provide a voltage proportional to the pressure. This voltage is provided as an input to a summing junction to which a second negative voltage proportional to desired pressure is also provided as an input. The output of the summing junction which is an error signal is applied to the bimorph to bend it until the voltage proportional to actual pressure is equal and opposite to the voltage proportional to desired pressure. The volume may communicate with a workpiece to thereby control its position.

## BRIEF DESCRIPTION OF THE DRAWINGS

Fig. 1 illustrates a preferred embodiment of the present inventon; and

Fig. 2 shows a pressure vs voltage diagram useful in explaining the significance of the shape of the container of Fig. 1.

## DESCRIPTION

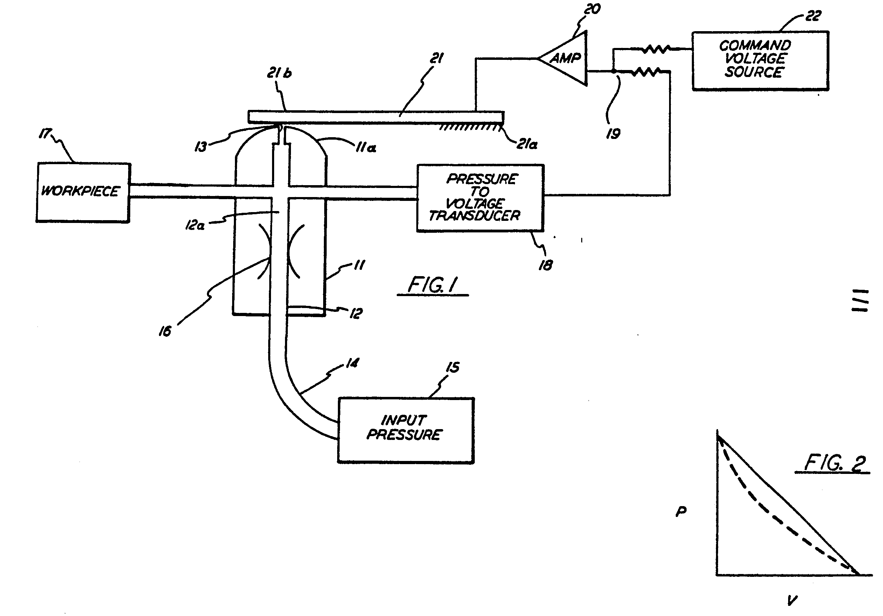

Referring to Fig. 1 there is shown a housing 11. The housing which may be cylindrically shaped has a passage 12 formed therein. The passage 12 terminates in a restrictive orifice 13 at one end thereof. The outer portion 11a of the housing 11 containing orifice 13 slopes downward and away from the orifice 13 in a continuous curve, e.g., spherical for reasons that are explained more fully hereinbelow. The other end of passage 12 is connected via conduit 14 to a source of pressurized gas 15, e.g., any suitable gas such as air may be used. Disposed in passage 12 is a restriction 16. The portion 12a of passage 12 is the volume 12a in which it is desired to control the value of pressure. Gas flows through passage 12 through restriction 16 and exhausts via orifice 13. The gas pressure is reduced at restriction 16 and again at orifice 13 to atmospheric pressure.

The volume 12a is connnected to a workpiece 17 the position or movement of which is controlled by the value of pressure within volume 12a. The volume 12a is connected to the workpiece 17 via a gas type actuator such as a bellows to assure there is no pressure loss from volume. Communicating with volume 12a is a pressure to voltage transducer 18. Pressure to voltage transducer 18 senses instantaneous pressure within volume and converts it to a voltage proportional to the pressure sensed. The output of transducer 18 is connected to summing junction 19. Also connected to summing junction 19 is a source of command voltage 22 which selects the pressure desired in volume 12a. The command voltage source 22 may be a voltage source and rheostat which is calibrated in terms of voltage or desired pressure or both.

The summing junction 19 provides an input to amplifier 20 whose output is connected in turn to a piezoelectric bender bimorph 12.

The piezoelectric bender bimorph is fixed at one end 21a while its other end 21b extends over and is adjacent to orifice 13. The normal position of end 21b of bimorph 21 relative to orifice 13 is such that it causes the pressure in volume 12a to be at the midpoint of the control range. However, it is the nature of a piezoelectric bimorph to bend upon application of a voltage. The amount and direction of bend is a function of amplitude and polarity, respectively, of the applied voltage. Thus, when voltage of the proper sign is applied, the bimorph 21 bends toward or away from orifice 13 thereby affecting the rate of exhaust of gas through orifice 13 and, thus, the pressure in volume 12a.

The piezoelectric bimorph 21 which is commercially available, e,g., from the Vernatron Co. of Ohio is made up of two strips of a piezo electric material such as lead zirconium titanate which are glued or otherwise joined together. Upon application of a voltage one strip contracts while the other expands causing the bimorph to bend in a direction determined by the polarity of the applied voltage and by an amount determined by the amplitude of the applied voltage. When voltage is removed from the bimorph 21, it returns to a reference position and, therefore, may be said to be biased to the reference position.

In order to control pressure within volume 12a to the degree required for the accurate and precise repeatability of control of a workpiece, it is critical that the

- 5-

relationship between voltage applied to the piezoelectric bimorph 21 and the pressure in volume 12a be linear or very nearly so. In other words, for every increment of voltage applied to piezoelectric bimorph 12, the pressure in volume 12a should change a known and predictable amount.

Fig. 2 illustrates a pressure vs voltage curve illustrating the foregoing mentioned required condition of linearity by the straight continuous line. It has been found that the shape of housing portion 11a adjacent end 21b of piezoelectric bimorph 21 is a critical factor in maintaining the required linearity between voltage and pressure. A surface which slopes down and away from the end 21b or orifice 13 in a continuous curve has been found to provide this linearity. On the other hand if the surface of the housing 11 adjacent end 21b of the bimorph 21 were substantially flat the relationship between applied voltage and pressure would be extremely non-linear as shown by the dashed line in Fig. 2.

The curved surface of portion 11a of housing 11 provides a large linear range of the voltage to pressure ratio which enables the apparatus of the present invention to exhibit its inherently high resolution (linearity) over a large pressure range resulting in an unusally large dynamic range.

In a practical embodiment of the present invention portion 11a of housing 11 is spherical shaped. However, it should be noted that the present invention is not limited to such a shape precisely spherical. In fact, the invention functions adequately even thorugh the surface 11a may deviate to some extent from a spherical shape.

In the practical embodiment discussed above the parameters of the system were radius of the spherical portion 11a equal to one inch. Orifice 13 was equal to 0.010 inches while that of restriction 16 is 0.004 inches. The pressure source 15 provides a gas pressure of 70 psi. The range of pressure over which the system operated was 15-45 psi. Over this 30 psi range pressure in volume 12a was found to be controllable in increments of 0.0073 psi. This degree of control is limited only by the sophistication of the electronics used and not by the mechanical aspects of the invention. In other words the increments of pressure change could be made much smaller if desirable by proper choice of the electronics in the feedback circuit.

Other modifications of the present invention are possible in light of the above description which should not be deemed as placing limitations on the inveniton other than those set forth in the claims which follow:

WHAT IS CLAIMED IS:

1.  A pressure control apparatus, comprising,

container means forming a volume therein,

a source of pressurized gas,

input conduit means connecting said source of
pressurized gas to said volume,

output conduit means connected to said volume for
exhausting gas therefrom,

piezoelectric bender bimorph means disposed adjacent
said output conduit means for controlling the rate of gas
exhasting from said volume,

said piezoelectric bender bimorph means inherently
biased to a position relative to said output conduit means
such that the internal pressure in maintained at the
approximate center of the control range,

circuit means for applying a voltage to said
piezoelectric bender bimorph means for bending it toward and
away from said output conduit means to maintain pressure
within said volume at a preselected amount.

2.  A pressure control apparatus according to Claim 1
wherein said output conduit means comprises,

an orifice formed through a wall of said container
means,

said wall containing said orifice formed to slope
down and away from said orifice in a continuous curve.

3. A pressure control apparatus according to Claim 2 wherein said wall containing said orifice is spherical.

4. A pressure control apparatus, comprising,

container means enclosing a volume,

a source of pressurized gas,

input conduit means connecting said source of pressurized gas to said volume,

an external portion of said container means having a surface which slopes in a-continuous curve,

output conduit means formed in said container means through said external portion for exhausing gas from said volume,

piezoelectric means disposed adjacent said output conduit means for controlling the rate at which gas exhausts from said volume,

circuit means connected to said piezoelectric means for applying a voltage to said piezoelectric means to move it between a reference position and said output conduit means controlling the rate of exhaust of gas from said volume to select the value of pressure within said volume.

5. A pressure control apparatus according to Claim 4 wherein said piezoelectric means comprises,

piezoelectric bender bimorph means.

6. A pressure control apparatus according to Claim 5 wherein said external portion of said container means is spherical in shape.

7. A pressure control apparatus according to Claim 6 wherein said piezoelectric bender bimorph means comprises,

an elongated bimorph bar having one end fixed and the other end disposed adjacent said output conduit means.

8. A pressure control apparatus according to Claim 7 further including,

a workpiece,

conduit means connected between said volume and said workpiece for moving said workpiece an amount determined by the selected pressure within said volume.

9. A pressure control apparatus according to Claim 8 wherein said circuit means comprises,

amplifier means having an output terminal connected to said piezoelectric bender bimorph means,

transducer means connected between said volume and said amplifier means providing a voltage input to said amplifier means proportional to the value of pressure within said volume.

10. A pressure control apparatus according to Claim 9 wherein said circuit means further includes,

command voltage means connected to the input of said amplifier means for selecting a voltage input thereto representative of the desired pressure within said volume.

WORKPIECE

COMMAND VOLTAGE SOURCE

AMP

PRESSURE TO VOLTAGE TRANSDUCER

INPUT PRESSURE

FIG. 1

FIG. 2

P

V

0102528